Europäisches Patentamt

European Patent Office

Office européen des brevets

(11) Numéro de publication: **0 408 412 A1**

# DEMANDE DE BREVET EUROPEEN

(21) Numéro de dépôt: 90401849.6

(22) Date de dépôt: 27.06.90

(51) Int. Cl.5: **B65H 45/12**, B29C 31/00, B29C 53/08, B65G 65/00

(30) Priorité: 12.07.89 FR 8909382

(43) Date de publication de la demande:
16.01.91 Bulletin 91/03

(84) Etats contractants désignés:
AT BE CH DE DK ES FR GB GR IT LI LU NL SE

(71) Demandeur: Société PROSYN POLYANE
Z.I. Le Clos Marquet
F-42400 Saint-Chamond(FR)

(72) Inventeur: Granger, Claude
Chemin de la Pilippière, La Varizelle
F-42400 Saint-Chamond(FR)
Inventeur: Troadec, Bernard
Le Vergoz
F-29313 Plougastel Daoulas(FR)

(74) Mandataire: Foiret, Claude et al
ATOCHEM Département Propriété
Industrielle
F-92091 Paris la Défense 10 Cédex 42(FR)

(54) **Dispositif et procédé de récupération pour stockage d'une gaine tubulaire après son pliage transversal.**

(57) Dispositif de déchargement d'un segment de gaine pliée transversalement d'une machine de pliage comprenant :
- un bâti fixe permettant de dérouler verticalement une gaine ouverte et possédant des colonnes servant de guides verticaux à un ensemble annulaire mobile pinçant l'extérieur de la gaine à une distance au moins égale à deux fois la hauteur désirée du pli et s'abaissant sensiblement de cette hauteur avant de relacher la gaine
- un moyen permettant de maintenir en forme de l'intérieur le segment de gaine pliée
- un plateau supportant le segment de gaine pliée
caractérisé en ce que le dispositif de maintien et le plateau de support du segment de gaine pliée forme un ensemble mobile formé d un plateau sur lequel sont montés au moins deux conformateurs, ledit plateau étant mobile autour d'un axe lui permettant un basculement du plan sensiblement horizontal au plan sensiblement vertical et lesdits conformateurs solidaires du plateau mobile délimitaot une périphérie déformable.

Selon ce dispositif il est possible de décharger facilement de la machine de pliage le segment de gaine pliée en introduisant de l'extérieur un bras de déchargement entre les conformateurs, le plateau mobile ayant été basculé à 90° afin de placer en position horizontale le segment de gaine pliée.

Fig. 2

## DISPOSITIF ET PROCEDE DE RECUPERATION POUR STOCKAGE D'UNE GAINE APRES SON PLIAGE TRANSVERSAL

La présente invention concerne un dispositif et un procédé de récupération pour stockage d'une gaine tubulaire après son pliage transversal. L'invention consiste, après le pliage transversal d'une gaine longitudinale continue pour obtenir dans le plan vertical une gaine à plis concentriques annulaires et superposés, à adapter sur la machine de pliage un dispositif de basculement dans le plan sensiblement horizontal de la gaine pliée, sans destruction ou déformation sensible des plis formés, de façon à faciliter son extraction.

Le brevet français 2 281 211 décrit une machine permettant le pliage transversal d'une gaine tubulaire continue. Selon le dispositif de cette machine la gaine maintenue ouverte au voisinage de son extrémité de section circulaire ou oblongue, est immobilisée en un point situé sur la hauteur choisie des plis, puis en deçà de son extrémité elle est pincée en au moins deux endroits situés symétriquement par rapport au centre virtuel de la gaine ouverte et rabattue sur elle-même de telle sorte que les endroits où elle est pincée soient amenés près de l'extrémité. Ce pincement se fait à une distance de l'extrémité égale à deux fois la hauteur finale désirée du pli. Cela fait, le pincement est relaché puis le cycle pincement, rabattement, relachement est recommencé autant de fois qu'il le faut pour obtenir le nombre de plis souhaité. La gaine est alors sectionnée au dessus du dernier pli. Le segment de gaine plié sur lui-même en plusieurs couches concentriques qui constitue un stock d'emballage est retiré du dispositif avant la fabrication d'un nouveau segment.

Le dispositif et le procédé de pliage repris dans leur principe dans la présente invention donnent de bons résultats, mais, comme il sera vu dans la suite présentent de sérieux inconvénients quant au déchargement du segment de gaine plié du dispositif de fabrication, surtout quand la gaine est d'un diamètre important, comme par exemple supérieur à 1,20 mètre.

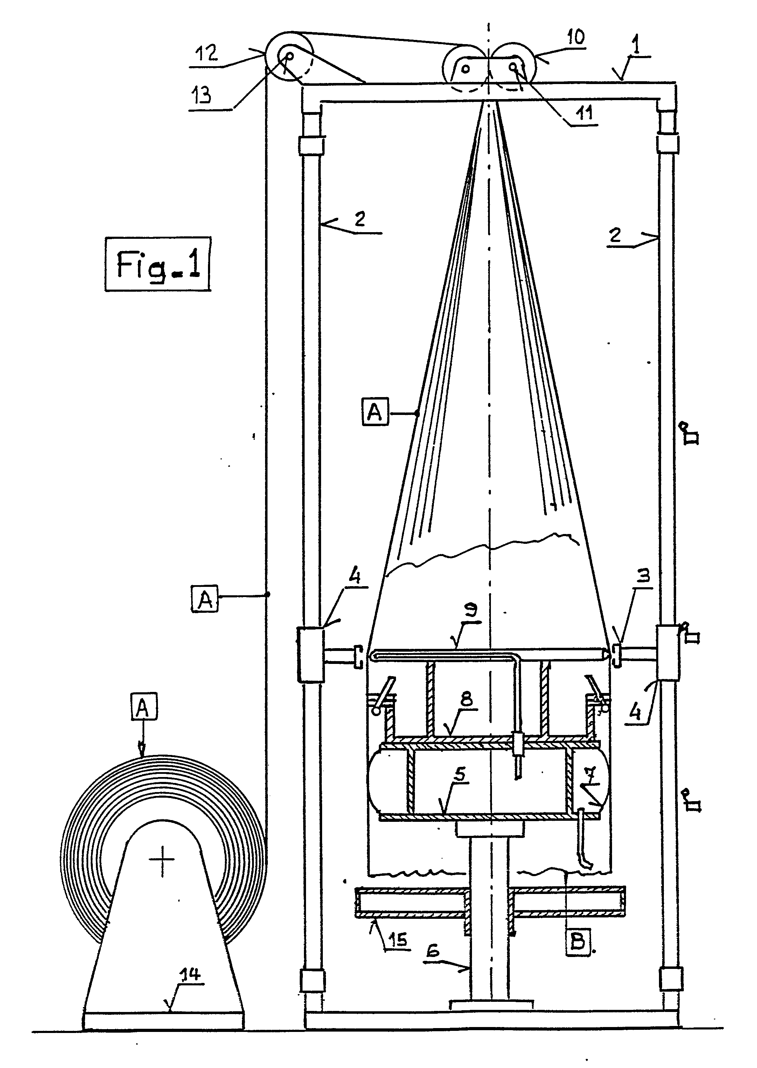

Selon la technique connue, présentée dans la Figure 1 la machine de pliage comprend un bâti fixe (1) dont sont solidaires des colonnes (2) servant de guides verticaux pour un ensemble annulaire mobile (3) et qui peut coulisser le long des colonnes (2) par des manchons (4).

Au centre du bâti et dans sa partie inférieure se trouve un mandrin (5) placé sur un socle (6) et comprenant une paroi extérieure (7) qui est souple afin de pouvoir être dilatée radialement par la pression d'un fluide conduit à l'intérieur du mandrin (5).

Sur le mandrin (5), est placé un support (8) sur lequel un plateau annulaire (9) est fixé. Ce plateau comprend des moyens permettant de pousser la gaine (A) dans le ou les systèmes de pincement disposés sur l'ensemble annulaire (3).

Au centre du bâti et dans sa partie supérieure se trouve un rouleau (10) monté fou sur un axe (11). Un second rouleau (12) monté fou sur un axe (13) et placé parallèlement au rouleau (10), peut être fixé au sommet du bâti (1). Au pied du bâti est placé un support fixe, ou berceau (14) devant recevoir une bobine de gaine (A).

L'extrémité libre (B) de la gaine (1) est engagée sur le ou les rouleaux (12) (10) puis est ouverte et insérée entre l'ensemble annulaire (3) et le plateau annulaire (9), puis est placée par dessus le mandrin (5) de telle sorte qu'elle se situe plus bas que ce mandrin et que la gaine (A) déroulée de la bobine coiffe complètement le plateau (9) et le mandrin (5).

Des moyens d'actionnement, tels que mécaniques, magnétiques, électriques et/ou électroniques permettent de faire coulisser de haut en bas et de bas en haut les manchons (4).

En fonctionnement de la machine une pression est établie à l'intérieur du mandrin (5) de sorte que la paroi souple (7) se dilate vers l'extérieur et, par frottement, immobilise la gaine (A) au voisinage de son extrémité (B).

L'ensemble annulaire (3) situé à deux fois la hauteur du pliage désiré de la gaine, reçoit dans ses systèmes de pincement la gaine poussée par les moyens fixés sur le plateau (9). Ces moyens de poussée étant éffacés l'ensemble annulaire est abaissé jusqu'à l'extrémité libre (B) de la gaine. Les systèmes de pincement de l'ensemble annulaire sont relachés et ledit ensemble annulaire est remonté à sa hauteur initiale pour un nouveau mouvement de pliage.

Quand le nombre de plis souhaité est atteint, la gaine est coupée et le segment de gaine plié sur lui-même est déchargé.

Si le dispositif est bien adapté au pliage de la gaine, il présente des difficultés de déchargement, surtout pour les gaines de grand diamètre. Selon le dispositif décrit les couches successives du segment de gaine plié ne sont maintenues qu'en un seul point sur une faible surface grâce à la pression radiale du mandrin (5). Cette pression est insuffisante lorsque la gaine est épaisse, et les couches successives glissent facilement les unes sur les autres en raison de leur poids. Pour remédier à cet inconvénient il a été prévu un plateau (15) sur lequel repose le segment de gaine plié. Ce perfectionnement ne facilite pas davantage le déchargement.

Selon ce système le déchargement s'effectue en extrayant verticalement la gaine pliée de la machine de pliage. Après découpe de la gaine le support (8) et le plateau annulaire (9) sont remontés avec la gaine (A) le long du bâti de façon à dégager la partie de la machine située au dessus du segment de la gaine plié. Le segment de gaine plié doit alors être soulevé, après dégonflage de la paroi extérieure souple du mandrin (5) pour être dégagé dudit mandrin. Cette opération est particulièrement délicate et nécessite un appareillage complexe quand il s'agit de décharger des segments de gaine pliés de grand diamètre. La gaine pliée doit être saisie très fortement dans sa seule partie supérieure avant d'être soulevée ce qui provoque parfois des déchirures et souvent une déformation du pliage par glissement des plis du fait du poids de l'ensemble.

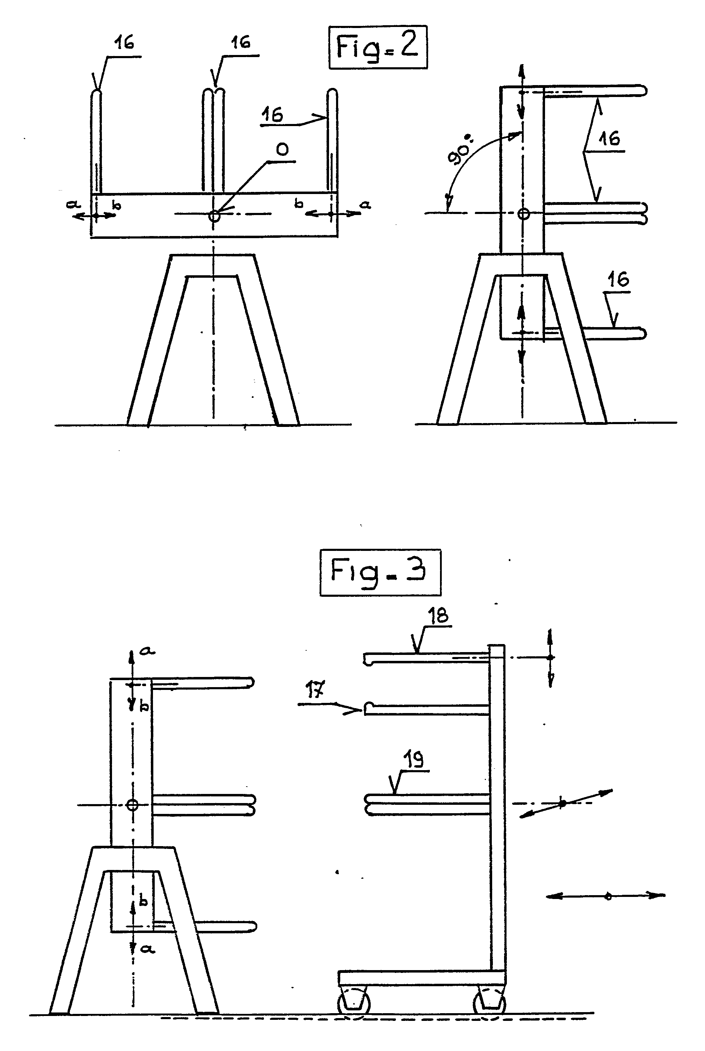

L'objet de l'invention, illustré par la Figure 2, est de transformer l'ensemble fixe plateau (15) et mandrin (5) en système mobile permettant d'amener sans déformation sensible, le segment de gaine plié en position horizontale afin de pouvoir être glissé et suspendu par l'intérieur sur au moins un bras de déchargement désuni de la machine.

Sur un plateau mobile autour d'un axe (0) sont montés au moins deux conformateurs (16) permettant de maintenir initialement la gaine à plier ouverte, puis en cours de fonctionnement de la machine de maintenir en forme le segment de gaine plié. Afin de permettre le basculement du plateau mobile de la position borizontale, position normale lors de la fabrication des plis, à la position sensiblement verticale de déchargement lui est fixé un moyen connu en lui-même, non représenté sur la figure, permettant sa mise en rotation autour de l'axe (0). Ces moyens connus peuvent être entre autres des vérins fixés au bâti maintenant le plateau mobile et reliés à ce dernier.

Les conformateurs montés sur le plateau mobile délimitent une périphérie déformable de telle sorte qu'en agissant de l'intérieur d'abord sur la gaine puis ensuite sur le segment de gaine plié ils maintiennent tendu ou non ledit segment de gaine plié.

Les conformateurs au moins au nombre de deux peuvent être des mandrins gonflables tels que décrits précédemment. Toutefois par facilité de construction et de fonctionnement une pluralité de barres disposées annulairement sur le plateau est préférée. Afin d'assurer la déformation de la périphérie délimitée par ces conformateurs, ils sont montés mobiles sur le plateau mobile. Ces conformateurs sont sensiblement perpendiculaires au plateau mobile dans la position de maintien de la gaine ou du segment de gaine plié.

La mobilité des conformateurs est assurée par tous moyens connus. Il peut s'agir de moyens électriques, pneumatiques tels que vérins, électroniques, électro magnétiques ou autres, assurant leur translation (a↔b Figure 2) vers le centre du plateau mobile ou encore un ef facement par rabattement des conformateurs sur le plateau mobile.

L'écartement entre deux conformateurs doit être suffisant pour, l'ensemble plateau mobile - conformateurs étant dans la position horizontale, laisser le libre passage entre eux à un moyen indépendant dudit ensemble introduit sensiblement parallèlement aux conformateurs pour permettre de supporter le segment de gaine plié et l'extraire de l'ensemble.

Le plateau mobile, supportant les conformateurs est monté sur un axe (0) lui permettant d'effectuer une rotation d'au moins 90° du plan horizontal au plan vertical et vice versa. Cet axe de rotation (0) peut partager le plateau mobile en son milieu et prendre appui sur les colonnes (2) du bâti (1). Nais pouvant être situé en un point quelconque entre le milieu et l'extrémité du plateau mobile cet axe peut prendre appui sur un bâti quelconque dissocié du reste de la machine.

Le mouvement de rotation de l'ensemble plateau mobile - conformateur est donné par tout moyen connu qu'il soit électrique, électronique, pneumatique, mécanique, électromécanique, électromagnétique ou autres, le plus usuel étant illustré par l'emploi d'au moins un verin tel qu'utilisé dans l'élévation des bennes.

En fonction du perfectionnement apporté à la machine de pliage des gaines, le procédé complet de fabrication de segment de gaine plié est décrit ci-après.

Le plateau mobile de réception de la gaine pliée se trouvant sensiblement perpendiculaire à l'axe de la gaine ouverte, on coiffe de cette dernière les moyens permettant de pousser la gaine (A) dans le ou les systèmes de pincement disposés sur l'ensemble annulaire mobile (3). Ces moyens permettant de pousser la gaine peuvent être fixés de façon amovible aux conformateurs, les systèmes actionnant ces pousseurs de la gaines pouvant également être identiques à ceux du FR 2 281 211 déjà cité. On abaisse ensuite la gaine, à l'extérieur des conformateurs, disposés sensiblement perpendiculairement au plateau mobile, jusqu'à ce que son extrémité entre sensiblement en contact avec le plateau mobile servant de socle. Après avoir poussé les conformateurs vers l'extérieur afin de tendre la gaine, cette dernière est saisie à une distance au moins égale à deux fois la hauteur désirée du pli, la partie saisie de la gaine étant amenée sensiblement au niveau du plateau mobile. La gaine est alors relachée et on recommence l'opération jusqu'à obtention de nombre de plis superposés souhaité. Après avoir coupé la gaine, de préférence au dessus du dernier pli, après avoir remonté la gaine (A) afin de libérer la partie supérieure de la machine et éventuellement escamoté les moyens permettant de pousser la gaine dans les dispositifs de pincement, selon l'invention on procède au basculement du plateau mobile à sensiblement 90°.

Dans ce basculement le segment de gaine plié immobilisé est entraîné sensiblement dans le plan horizontal, tendu sur les conformateurs fixés au plateau mobile. Le plateau mobile étant en position de déchargement on introduit à l'intérieur du segment de gaine le moyen de déchargement, dans l'espace laissé entre les conformateurs, sur lequel on fait reposer le segment de gaine plié après avoir réduit la tension par déplacement des conformateurs vers la partie centrale du plateau mobile. Une fois le segment de gaine retiré sur le bras de déchargement le plateau mobile et les conformateurs sont ramenés en position pour réceptionner un nouveau pliage de gaine.

Selon l'invention les segments de gaine pliés peuvent être facilement empaquetés et/ou stockés sans subir de manipulation pouvant provoquer un déséquilibre dans la masse pliée entrainant une déformation du pliage.

Le moyen permettant de supporter le segment de gaine plié lors de son extraction peut être une simple barre formant bras de déchargement, mais de façon plus pratique il s'agit généralement de la fourche d'un charriot élévateur. De façon préférée ce moyen est un engin mobile, représenté en Figure 3, muni d'au moins une broche support (17) de préférence escamotable venant supporter la gaine à l'intérieur du dispositif de pliage et éventuellement d'au moins une broche de maintien (18) disposée de façon à ce que, en position de déchargement, elle se trouve à l'extérieur de la gaine et puisse la pincer avec la broche de support (17). Ces broches supports et de maintien peuvent éventuellement posséder un moyen de translation verticale. Il est également possible que cet engin mobile possède en plus au moins deux broches écarteuses (19), pouvant pénétrer à l'intérieur de la gaine, également éventuellement escamotables dont au moins une possède un moyen de translation sensiblement horizontale et éventuellement verticale pour permettre la mise à plat du segment de gaine après déchargement de la machine de pliage. Lorsque la gaine est sortie de la machine de pliage, par déplacement simultané dans le plan horizontal de la ou des broches écarteuses mobiles (19) et dans le plan vertical de la ou des broches supports (17) accompagnées éventuellement de la ou des broches de maintien (18) cette ou ces broches supports (17) venant sensiblement dans l'alignement des broches écarteuses (19), elle peut être directement stockée à plat, par exemple sur palette, après recul de l'engin et/ou tout simplement avoir escamoté les broches intérieures supports et écarteuses (17) (19).

## Revendications

1.- Dispositif de déchargement d'un segment de gaine tubulaire plié transversalement d'une machine de pliage comprenant :
- un bâti fixe permettant de dérouler verticalement une gaine ouverte et possédant des colonnes servant de guides verticaux à un ensemble annulaire mobile pinçant l'extérieur de la gaine à une distance au moins égale à deux fois la hauteur désirée du pli et s'abaissant sensiblement de cette hauteur avant de relacher la gaine
- un moyen permettant de maintenir en forme de l'intérieur le segment de gaine plié
- un plateau supportant le segment de gaine plié
caractérisé en ce que le dispositif de maintien et le plateau de support du segment de gaine plié forme un ensemble mobile formé d'un plateau sur lequel sont montés au moins deux conformateurs mobiles, ledit plateau étant mobile autour d'un axe lui permettant un basculement du plan sensiblement horizontal au plan sensiblement vertical et lesdits conformateurs solidaires du plateau mobile délimitant une périphérie déformable de la gaine et en ce que un moyen indépendant de la machine de pliage permet de décharger la gaine pliée lors de son extraction.

2.- Dispositif selon la revendication 1 caractérisé en ce que l'axe de rotation est situé en un point quelconque entre le milieu et l'extrémité du plateau.

3.- Dispositif selon l'une des revendications 1 et 2 caractérisé en ce que la rotation du plateau mobile est provoquée par au moins un vérin.

4.- Dispositif selon l'une des revendications 1 à 3 caractérisé en ce que les conformateurs sont mobiles sur le plateau mobile et sensiblement perpendiculaires à ce dernier en position de maintien de la gaine ou du segment de gaine plié.

5.- Dispositif selon l'une des revendications 1 à 4 caractérisé en ce que les conformateurs peuvent effectuer un mouvement de translation vers le centre du plateau mobile.

6.- Dispositif selon l'une des revendications 1 à 4 caractérisé en ce que les conformateurs peuvent se rabattre sur le plateau mobile.

7.- Dispositif selon l'une des revendications 1 à 4 caractérisé en ce que le moyen indépendant de la machine de pliage permettant de supporter la gaine pliée lors de son extraction est un engin mobile muni d'au moins une broche de support venant supporter la gaine à l'intérieur du dispositif de pliage.

8.- Dispositif selon la revendication 7 caractérisé en ce que l'engin mobile est muni d'au moins une broche de maintien disposée de façon à ce que, en position de déchargement, elle se trouve à l'extérieur de la gaine et puisse la pincer avec la broche de support.

9.- Dispositif selon l'une des revendications 7 ou 8 caractérisé en ce que les broches possèdent un moyen de translation verticale.

10.- Dispositif selon l'une des revendications 7 à 9 caractérisé en ce que l'engin mobile possède au moins deux broches écarteuses pouvant pénétrer à l'intérieur de la gaine, dont au moins une possède un moyen de translation sensiblement horizontale.

11.- Procédé de récupération sur une machine de pliage d'une gaine tubulaire après son pliage transversal obtenue sous forme de segment de gaine plié en maintenant ouverte une gaine au voisinage de son extrémité de section circulaire ou oblongue, déroulée verticalement, et, après son immobilisation en un point situé sur la hauteur choisie des plis, en rabattant vers cette extrémité la gaine pincée en au moins deux endroits situés symétriquement par rapport au centre virtuel de la gaine ouverte, le pincement étant fait à une distance de l'extrémité égale à deux fois la hauteur désirée du pli, le segment de gaine plié reposant sur un plateau disposé sensiblement perpendiculaire à l'axe de la gaine ouverte caractérisé en ce que, le segment de gaine plié maintenu immobile et tendu de l'intérieur par au moins deux conformateurs mobiles fixés sur le plateau, on fait basculer le plateau à sensiblement 90° afin d'amener le segment de gaine plié dans le plan sensiblement horizontal, puis on introduit de l'extérieur un moyen de déchargement dans l'espace laissé entre les conformateurs sur lequel on fait reposer le segment de gaine après avoir réduit la tension par déplacement des conformateurs vers la partie centrale du plateau.

12.- Procédé selon la revendication 11 caractérisé en ce qu'on utilise un dispositif selon l'une des revendications 1 à 10.

13.- Procédé selon l'une des revendications 11 ou 12 caractérisé en ce que le plateau étant basculé à sensiblement 90° on décharge la gaine au moyen de l'engin mobile de la revendicatin 10 et que l'on met à plat le segment de gaine par déplacement simultané dans le plan horizontal d'au moins une broche écarteuse mobile et dans le plan vertical de la ou des broches supports, ces dernières venant sensiblement dans l'alignement des broches écarteuses.

**Fig_1**

Fig. 2

Fig. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y,D | FR-A-2281211 (SOCIETE D'ETUDES ET REALISATIONS DE COMPLEXES INDUSTRIELS DIVERS) * le document en entier * | 1 | B65H45/12 B29C31/00 B29C53/08 B65G65/00 |
| Y | EP-A-131082 (FABRIQUES DE TABAC REUNIES) * le document en entier * | 1 | |
| A | FR-A-2312426 (RENAULT) * le document en entier * | 1 | |
| A | US-A-4067451 (WINTERS) * le document en entier * | 1 | |
| A | US-A-4692134 (DOS SANTOS COPIA) * le document en entier * | 1 | |

**DOMAINES TECHNIQUES RECHERCHES (Int. Cl.5)**

B65H
B29C
B65G
B31B

Le présent rapport a été établi pour toutes les revendications

| Lieu de la recherche | Date d'achèvement de la recherche | Examinateur |
|---|---|---|
| LA HAYE | 10 OCTOBRE 1990 | EVANS A.J. |